# EUROPEAN PATENT APPLICATION

(11) **EP 2 209 066 A1**
(43) Date of publication of application: **21.07.2010**
(21) Application number: 08845919.3
(22) Date of filing: 15.10.2008
(51) Int. Cl.: G06F 3/048, H04M 1/00

(54) **MOBILE TERMINAL, MOBILE TERMINAL SYSTEM, MOBILE TERMINAL CONTROL METHOD, PROGRAM AND RECORDING MEDIUM**

(30) Priority: 29.10.2007 JP 2007280787
(71) Applicant: Nec Corporation, Tokyo 108-8001 (JP)
(72) Inventor: NAKAYAMA, Junya, Tokyo 108-8001 (JP)
(74) Representative: Vossius & Partner
(86) International application number: PCT/JP2008/068633
(87) International publication number: WO 2009/057447

(57) **Abstract**

An object of the present invention is to provide a mobile terminal, a mobile terminal system, a control method of the mobile terminal, a program and a storage medium which have a high convenience. The mobile terminal, which makes an information indicating apparatus indicate information on the basis of data, includes an information managing apparatus which makes the information indicating apparatus indicate download data in preference to pre-installed data.

## Description

### TECHNICAL FIELD

The present invention relates to a mobile terminal, a mobile terminal system, a control method of the mobile terminal, a program and a storage medium.

### BACKGROUND ART

Nowadays, a mobile terminal equipped with a feeling recognizing engine, which extracts feeling information from character information and selects an image corresponding to the feeling information, can download an image of a decoration mail. The decoration mail used in the description means a mail in which an image data is inserted in a body of message at a time when the mail is created. As an example of decorating the mail, by recognizing a feeling of pleasure from a character 'pleased', an image, in which a mark of star is arranged around the character 'pleased', is inserted in the mail to decorate the mail.

An example of the decoration mail is disclosed in patent document 1.
An image supplying managing apparatus is configured so as to be able to communicate via a network with a plurality of terminal apparatuses which can send and receive a mail mutually. The image supplying managing apparatus to supply an image, which is used in a body of mail, to the terminal apparatus includes an image storing means to store a plurality of image data which are used in the body of mail, an image sending means to send a plurality of image data, which are stored in the image storing means, to the terminal apparatus in response to a request of the terminal apparatus, an access record storing database means to store an access record of each terminal apparatus per the image data, and an access record managing means to receive the access record per the image data from the terminal apparatus and to make the access record stored in the access record storing database means. The image supplying managing apparatus operates as will be described in the following.

The image supplying managing apparatus let user terminal apparatus 200 download a character logo palette (including a pictograph), which is for inputting the pictograph (fixed pictograph and character logo) in the body of mail, so as to create a mail attached with a character logo by use of the character logo palette, while the mail image supplying managing server 100 obtains the access record of each character logo from the user terminal apparatus 200 and registers the access record in the database.

Patent document 2 discloses an example that a character string inputted in Japanese kana is converted into a character string in Japanese kanji or a character string which is made of mixture of Japanese kanji and Japanese kana.
A word processor disclosed in patent document 2 includes a plurality of dictionaries for kana-kanji conversion which store a character string in kanji or a character string in the mixture of kana and kanji in advance as a conversion candidate for the character string in kana, a plurality of learning buffers each of which is set correspondingly to each of the plural dictionaries for kana-kanji conversion and which stores the learned conversion candidate for the character string in kana in association with order of use, and a control apparatus which decides the order of use over all learning buffers when the learning buffer learns. With the above structure, the word processor is **characterized in that** it is possible to change the order of using the conversion candidate so that the conversion candidate, which is used frequently, may be indicated with priority. The word processor operates as will be described in the following.

The word processer changes the order of using the conversion candidate so that the conversion candidate, which is used frequently, may be indicated with priority over all dictionaries for kana-kanji conversion. Therefore, it is possible to indicate the conversion candidate, which is used latest, with priority.

Patent document 3 discloses that an image data to be inserted is indicated in the order which is decided on the basis of storage time.
A karaoke apparatus disclosed in patent document 3 includes a musical composition data storing means to store a plurality of musical compositions which includes sound data for karaoke performance, lyrics data and chorus sound data, a play means to carry out a play which includes synthesizing the sound for the karaoke performance on the basis of the inputted musical composition, indicating the lyrics and playing back the chorus sound, and a musical composition selecting means to select one musical composition data out of a plurality of musical composition data and to input the selected musical composition data to the play means. The karaoke apparatus further includes an information data storing means to store information data which includes an explanatory note data having the same configuration as the lyrics data have, and announcement data having the same configuration as the chorus sound data have, and an information data selecting means to select information data and to input the selected information data to the play means. The karaoke apparatus operates as will be described in the following.

The karaoke apparatus stores a plurality of musical composition data including the sound data for the karaoke performance, the lyrics data and the chorus sound data, and when one composition data is selected, the play means synthesizes the sound for the karaoke performance on the basis of the sound data for the karaoke performance to make a speaker output the synthesized sound, and indicates the lyrics on a monitor on the basis of the lyrics data, and plays back the back chorus sound on the basis of the chorus sound data to make the speaker output the played-back back chorus sound or the like.

Furthermore, the karaoke apparatus stores information data including explanatory note data having the same configuration as the lyrics data have, and announcement data having the same configuration as the chorus sound data have. The lyrics data includes, for example, character data to express contents of indication, timing data to express indication timing, coordinates data to express an indication position, an indication time data to express an indication time or the like. The explanatory note also includes the same constituent as one mentioned above. The chorus sound data includes, for example, waveform data of the chorus sound, timing data to direct timing for starting to play back the waveform data or the like. The announce data also includes the same constituent as one mentioned above. Accordingly, by inputting the information data to the play means, it is possible to indicate the explanatory note on the monitor and to output the announce from the speaker.
- Patent document 1:: Japanese Patent Application Laid-Open No. 2007-157082
- Patent document 2:: Japanese Patent Application Laid-Open No. 1987-251962
- Patent document 3:: Japanese Patent Application Laid-Open No. 1995-199972

### DISCLOSURE OF INVENTION

### TECHNICAL PROBLEM

While according to the art, which is used in the mobile terminal equipped with the feeling recognizing engine, and the art described in the patent document 1, it may be possible to indicate the download image and the decoration mail image (pre-installed image), which are extracted from the character information, in the case that user creates the decoration mail, it takes much time to select the download image which user wants to use since the images are indicated in random order, and consequently, user feels inconvenient.

Moreover, according to the art described in the patent document 2, there is a possibility that the download image is indicated with delay, since the image data to be inserted is indicated in the order determined on the basis of number of usage times. Therefore, it takes much time to select the download image which user wants to use, and consequently, user feels inconvenient.

Furthermore, according to the art described in the patent document 3, there is a possibility that the download image is indicated with delay, since the image data to be inserted is indicated in the order determined on the basis of storage time. Therefore, it takes much time to select the download image which user wants to use, and consequently, user feels inconvenient.

Accordingly, an object of the present invention is to provide a mobile terminal, a mobile terminal system, a control method of the mobile terminal, a program and a storage medium which have high convenience in order to settle the above-mentioned problem.

### TECHNICAL SOLUTION

A first apparatus according to the present invention has a feature that a mobile terminal, which makes an information indicating apparatus indicate information on the basis of data, includes an information managing apparatus which makes the information indicating apparatus indicate download data in preference to pre-installed data.

A first system according to the present invention has a feature that in a mobile terminal system including a mobile terminal which makes a information indicating apparatus indicate information on the basis of data, and a repeater apparatus which transfers data from one mobile terminal to the other mobile terminal, the mobile terminal includes an information managing apparatus which makes the information indicating apparatus indicate download data in preference to pre-installed data.

A first method according to the present information has a feature that a control method of a mobile terminal, which can make an information indicating apparatus indicate data, makes the information indicating apparatus indicate download information in preference pre-installed data.

A first program according to the present invention has a feature that a control program able to be read by a computer of a mobile terminal, which can make an information indicating apparatus indicate data, makes the computer of the mobile terminal carry out an operation to indicate download data in preference to pre-installed data.

A first storage medium according to the present invention has a feature to store the first program.

### ADVANTAGEOUS EFFECTS

According to the present invention, it is possible for user to select the download data with priority in the case that user selects the image data, through making the information indicating apparatus indicate the download data in preference to the pre-installed data. As a result, it is possible to provide a mobile terminal, a mobile terminal system, a control method of the mobile terminal, a program and a storage medium which have high convenience.

### BEST MODE FOR CARRYING OUT THE INVENTION

### FEATURE

The mobile terminal has a feature that it is easy to indicate the download data through giving different weight respectively to the download data and the pre-installed data which is stored inside, and consequently, it is possible to reduce selection steps which are carried out by user after downloading.
That is, a preferred selection and indication system for the download data in the mobile terminal makes the mobile terminal indicate the download image or the like in preference to the pre-installed image or the like which is stored inside. Moreover, a method how to give priority to the pre-installed image and the download image is to give the different weight respectively to the download data and pre-installed data in order to indicate the download data with priority.

The information managing apparatus of the mobile terminal of the present invention selects M data out of all download data, and selects N-M data (N is number of all data and M is integer larger than 0 and smaller than N) out of all download data and all pre-installed data, and then, decides order of indicating the data.

Here, to give the weight means to check information (for example, header), which the download image includes and which indicates to be the download image, and to process the download data in preference to the pre-installed image. Hereinafter, a configuration and an operation of the mobile terminal and the mobile terminal system will be described.

### <An exemplary embodiment 1 of the present invention>

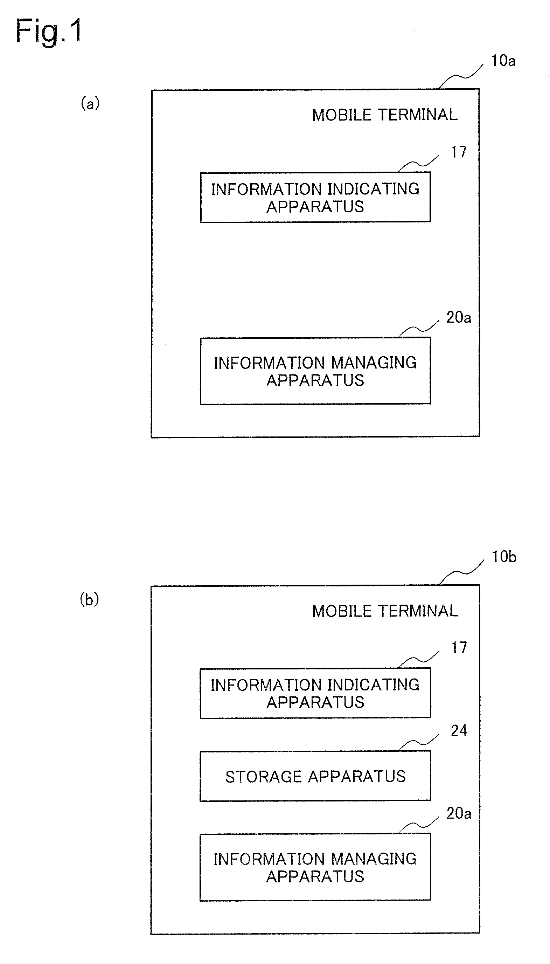

FIG. 1 (a) is a block diagram of a mobile terminal according to the exemplary embodiment of the present invention, and FIG. 1 (b) is a block diagram of a mobile terminal according to another exemplary embodiment of the present invention.
While a case that a cellular phone is applied to the mobile terminal is described according to the exemplary embodiment of the present invention, the present invention is not limited to the case. That is, it may be preferable that PDA and laptop computer are applied to the mobile terminal.
A cellular phone 10a shown in FIG. 1 (a) includes an information indicating apparatus 17 which indicates an image and a character, and an information managing apparatus 20a which stores information of image data, and decides priority and manages the information indicating apparatus 17.
While, for example, LCD (Liquid Crystal Display) is exemplified as the information indicating apparatus 17, it may be preferable that an organic EL (Elector Luminescence) device is applied.
Moreover, CPU as a computer is exemplified as the information managing apparatus 20a.

### <An exemplary embodiment 2 of the present invention>

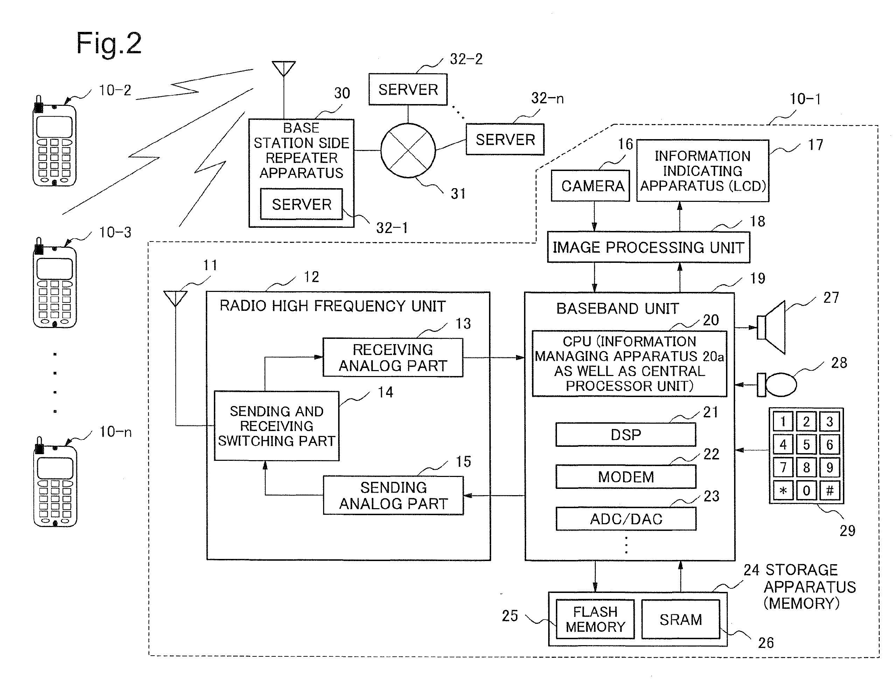

A cellular phone 10b shown in FIG. 1 (b) corresponds to the cellular phone 10a shown in Fig. 1 (a) equipped with a storage apparatus 24.
That is, the cellular phone 10b shown in FIG. 1 (b) includes the information indicating apparatus 17 which indicates the image and the character, the information managing apparatus 20a which stores information of the image data and decides priority and manages the information indicating apparatus 17, and the memory storage 24.
The cellular phone 10b will be described furthermore in detail in FIG. 2.

### <An exemplary embodiment 3 of the present invention>

FIG. 2 is an example of a block diagram of a mobile terminal system which adopts the cellular phone shown in FIG. 1 (b).
The cellular phone 10b (10-1, 10-2,... , and 10-n) shown in FIG. 2 as the mobile terminal includes an antenna 11, a radio high frequency unit 12 which receives and sends a radio wave, and a baseband unit 19 which controls a communication procedure, as a main component.
The radio high frequency unit 12 includes a receiving analog part 13, a sending and receiving switching part 14 and a sending analog part 15.
The receiving analog part 13 includes a local oscillation circuit, LNA (Low Noise Amplifier), a mixer circuit, and an IF (Intermediate Frequency) amplifier circuit, as a main component.
The sending analog part 15 includes an IF modulation circuit, a mixer circuit, and a power amplifier circuit, as a main component.

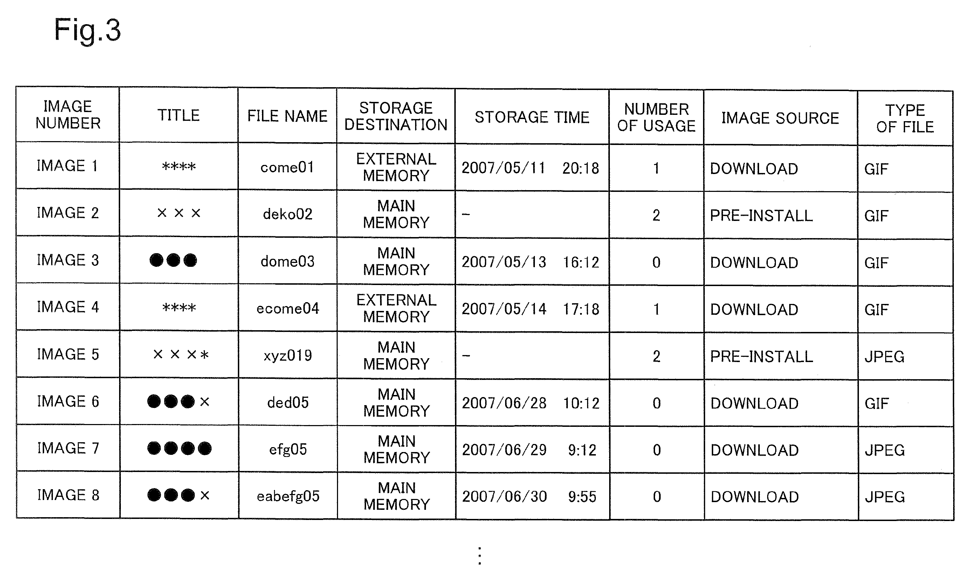

The baseband unit 19 includes CPU (Central Processing Unit) 20 which works also as the information managing apparatus 20a, DSP (Digital Signal Processor) 21, a modem 22 and an AD/DA converter circuit 23. An image processing unit 18, the storage apparatus 24, a speaker 27, a microphone 28 and a key 29 are connected to the baseband unit 19.
For example, a flash memory 25 and SRAM 26 are applied to the storage apparatus 24. A camera 16 and the information indicating apparatus (for example, LCD) 17 are connected to the image processing unit 18. The storage apparatus 24 stores number added to the image, title of the image, file name, destination of storage, storage time, number of usage times, source of the image and type of the file to form a table shown in FIG. 3.

Index 40 in the figure expresses a base station side repeater apparatus which is connected to various servers 32-1, 32-2, ..., and 32-n via a network 31. Further, a conventional repeater apparatus except for the base station side repeater apparatus is omitted in the figure.
A mobile terminal system includes these cellular phones 10-1, 10-2, ..., and 10-n, the base station side repeater apparatus 30, the network 31, and the servers 32-1, 32-2, ..., and 32-n.

The image, which is indicated by the information indicating apparatus arranged inside the cellular phone 10-1, includes a main area 17a for indicating the image data, and software-key areas 17b and 17c for indicating a function menu and a selection key button.

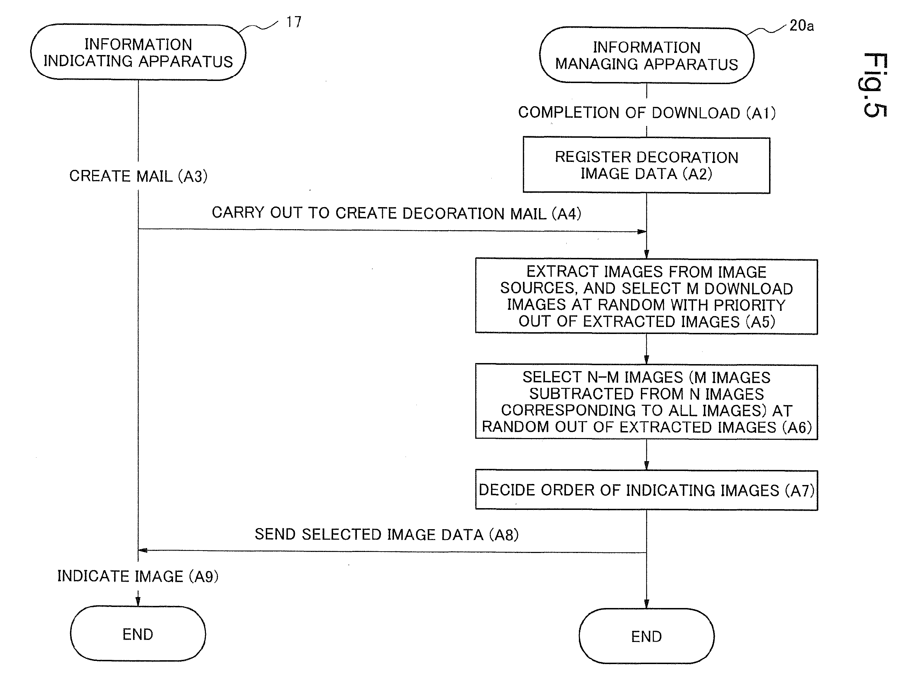

Hereinafter, an operation according to the exemplary embodiment of the present invention will be described.
An operation that a download image, which user wants to use after downloading, is indicated with priority by the cellular phone 10 will be described in the following with reference to FIG. 5.
FIG. 5 is an example of sequence diagram showing an operation of the mobile terminal according to the present invention.
User downloads a decoration image (A1).
After completion of the download, user registers the number added to the image, the title of the image, the file name, the destination of storage, the storage time, the number of usage times, the source of the image and the type of the file in the storage apparatus 24 of the information managing apparatus 20a (A2).
After registration, user starts to create a mail (A3).

User creates a decoration mail which includes the decoration image (A4).
The decoration image is identified out of contents stored in the storage apparatus 24 of the information managing apparatus 20a, and after searching the identified data, M image data, whose source corresponds to the download, are selected at random out of the searched data (A5).
After the selection mentioned above, N-M image data, which corresponds to the previously selected M download image data subtracted from N image data (N is number of times capable of indication), are selected at random out of the download image and the pre-installed image (A6).

Order of indicating the selected M image data is firstly decided at random and afterward, order of indicating the remaining N-M image data is decided (A7).
Data to be indicated and order of indicating the data are sent to the information indicating apparatus 17 (A8).
The images are indicated with the M image data first (A9).
In the case that, for example, N is equal to 5 and M is equal to 3, images are extracted on the basis of the type of file described in the table of the storage apparatus 24, and three images whose source corresponds to the download are selected at random. In this case, the images 1, 3 and 6 are selected. Then, the remaining two images are selected at random out of images 2, 4, 5, 7 and 8. In this case, the images 2 and 4 are selected. With regard to the order of indication, order of indicating images 1, 3 and 6 is firstly decided and afterward, order of indicating the remaining two images 2 and 4 is decided. The decided order (for example, image 1-> image 3-> image 6-> image 2-> image 4) is sent to the information indicating apparatus 17, and the information indicating apparatus 17 indicates the images in the decided order of the indication.

As mentioned above, the preferred selection and indication system for the download data in the mobile terminal makes the information indicating apparatus indicate not the default image, which is pre-installed inside and which user has used, but the download image, which user wants to use after downloading, with priority. Therefore, it is possible to reduce the selection steps which user carries out.

### (Program and storage medium)

### <An exemplary embodiment 4 of the present invention>

The cellular phone described above according to the present invention is realized by a program which makes the computer carry out the control processing.
A program, which is a control program able to be read by the computer of the mobile terminal capable of making an information indicating apparatus indicate data and which specifically makes CPU of the cellular phone carry out a processing of making the information indicating apparatus indicate download data in preference to pre-installed data, is exemplified.

### <An exemplary embodiment 5 of the present invention>

Moreover, it may be preferable to make CPU carry out the following processing.
(a) a processing to select M data out of all download data
(b) a processing to select N-M data (N is number of all data, and M is integer larger than 0 and smaller than N) out of all download data and all pre-installed data
(c) a processing to decide order of indication

As a result, the mobile terminal according to the present invention can be realized if only environment, in which the program can be run, is set up.

### <An exemplary embodiment 6 of the present invention>

Such program may be stored in a storage medium which can be read by the computer.
Here, for example, the storage medium, which can be read by the computer, such as CD-ROM (Compact Disc Read Only Memory), a flexible disc (FD), CD-R (CD Recordable) and DVD (Digital Versatile Disk), the semiconductor memory such as the flash memory, RAM (Random Access Memory), ROM (Read Only Memory) and FeRAM (Ferroelectric memory), and HDD (Hard Disc Drive) are exemplified as the storage medium.

### <An exemplary embodiment 7 of the present invention>

As the other exemplary embodiment of the present invention, the information managing apparatus 20a, which has a function to extract an applicable image data, searches the applicable data out of contents of the storage apparatus 24, and selects M image data out of the searched data not at random on the basis of the source of the image data which indicates to be the download data, but in the order on the basis of the storage time or the frequency in use, that is, number of usage times. Moreover, it is possible to decide priority on the basis of combination of the source of the image data, the storage time, and the order of frequency in use.
As a result, it is possible to select the download data with priority, in the case that user selects the image data or the like.

### <An exemplary embodiment 8 of the present invention>

Similarly, it may be preferable to decide priority on the basis of combination of the storage time and the frequency in use, in the case that N-M image data are selected out of the download data and the pre-installed data.
As a result, it is possible to select the download data with priority, in the case that user selects the image data or the like.

### <An exemplary embodiment 9 of the present invention>

It may be preferable to decide priority of not only download data of the image but also download data of other picture and a software program on the basis of combination of the source of the image data, the storage time, and the order of frequency in use.
As a result, it is possible to select the download data with priority, in the case that user selects the image data or the like.

### <An exemplary embodiment 10 of the present invention>

It may be preferable that an information managing apparatus of a mobile terminal according to the present invention selects M data at random out of all download data and selects N-M data at random out of all download data and all pre-installed data.
As a result, it is possible to select the download data with priority, in the case that user selects the image data or the like.

### <An exemplary embodiment 11 of the present invention>

It may be preferable that an information managing apparatus of a mobile terminal according to the present invention selects M data in order of storage time out of all download data and selects N-M data in order of storage time out of all download data and all pre-installed data.
As a result, it is possible to select the download data with priority, in the case that user selects the image data or the like.

### <An exemplary embodiment 12 of the present invention>

It may be preferable that an information managing apparatus of a mobile terminal according to the present invention selects M data in order of number of indication times out of all download data and selects N-M data in order of number of indication times out of all download data and all pre-installed data.
As a result, it is possible to select the download data with priority, in the case that user selects the image data or the like.

### <An exemplary embodiment 13 of the present invention>

It may be preferable that an information managing apparatus of a mobile terminal according to the present invention selects M data in order of number of indication times out of all download data and selects N-M data in order of number of indication times out of all download data and all pre-installed data.
As a result, it is possible to select the download data with priority, in the case that user selects the image data or the like.

### <An exemplary embodiment 14 of the present invention>

It may be preferable that an information managing apparatus of a mobile terminal according to the present invention decides priority for indicating data on the basis of combination of source of the data, storage time and order based on number of indication times. Moreover, it may be preferable that the data is the image data or the program data.
As a result, it is possible to select the download data with priority, in the case that user selects the image data or the like.

Since each of the above mentioned embodiments is an example of preferable embodiment according to the present invention, the invention is not limited to these embodiments. It is possible that various changes in form and details may be made therein without departing from the spirit and scope of the present invention.
This application is based upon and claims the benefit of priority from Japanese Patent Application No. 2007-280787, filed on October 29, 2007, the disclosure of which is incorporated herein in its entirety by reference.

### BRIEF DESCRIPTION OF DRAWINGS

FIG. 1 (a) is a block diagram of a mobile terminal according to an exemplary embodiment of the present invention, and (b) is a block diagram of a mobile terminal according to another exemplary embodiment of the present invention.
FIG. 2 is an example of a block diagram of a mobile terminal system which adopts the mobile terminal shown in FIG. 1.
FIG. 3 is an example of a table stored in a storage apparatus which is applied to the mobile terminal shown in FIG. 1.

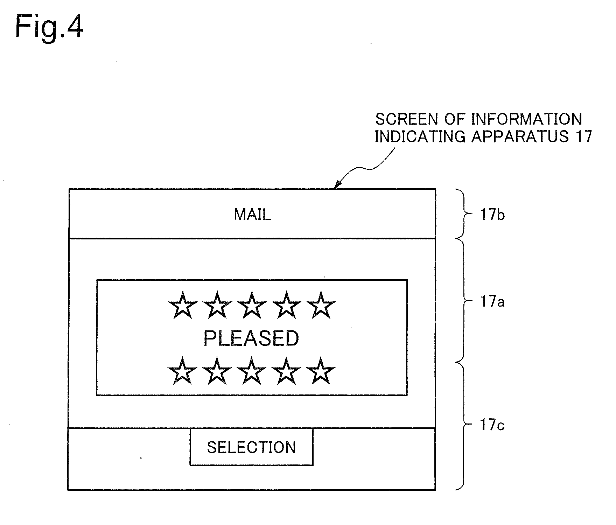

FIG. 4 is an example of an image which is indicated on an information indicating apparatus arranged inside the mobile terminal shown in FIG. 1.
FIG. 5 is an example of a sequence diagram showing an operation of the mobile terminal according to the present invention.

### EXPLANATION OF REFERENCE

- 10a and 10b (10-1 to 10-n): Mobile terminal (cellular phone)
- 11: Antenna
- 12: Radio high frequency unit
- 13: Receiving analog part
- 14: Sending and receiving switching part
- 15: Sending analog part
- 16: Camera
- 17: Information indicating apparatus
- 18: Image processing unit
- 19: Baseband unit
- 20: CPU
- 20a: Information managing apparatus
- 21: DSP
- 22: Modem
- 23: AD/DA converter circuit
- 24: Storage apparatus
- 25: Flash memory
- 26: SRAM
- 27: Speaker
- 28: Microphone
- 29: Key
- 30: A base station side repeater apparatus
- 31: Network
- 32-1 to 32-n: Server

## Claims

1. A mobile terminal which makes an information indicating apparatus indicate information on the basis of data, **characterized by** comprising:
an information managing apparatus which makes said information indicating apparatus indicate download data in preference to pre-installed data.

2. The mobile terminal according to claim 1, **characterized in that**:
said information management apparatus selects M data out of all the download data, and selects N-M data (N is number of all data and M is integer larger than 0 and smaller than N) out of all the download data and all the pre-installed data, and decides order of indicating images.

3. The mobile terminal according to claim 2, **characterized in that**:
said information managing apparatus selects M data at random out of all the download data and selects N-M data at random out of all the download data and all the pre-installed data.

4. The mobile terminal according to claim 2, **characterized in that**:
said information managing apparatus selects M data in order of storage time out of all the download data and selects N-M data in order of storage time out of all the download data and all the pre-installed data.

5. The mobile terminal according to claim 2, **characterized in that**:
said information managing apparatus selects M data in order of number of indication times out of all the download data and selects N-M data in order of number of indication times out of all the download data and all the pre-installed data.

6. The mobile terminal according to claim 2, **characterized in that**:
said information managing apparatus selects M data in order of number of indication times out of all the download data and selects N-M data in order of number of indication times out of all the download data and all the pre-installed data.

7. The mobile terminal according to any one of claim 3 to claim 6, **characterized in that**:
said information managing apparatus decides priority of indicating data on the basis of combination of data source, storage time and order of number of indication times.

8. The mobile terminal according to any one of claim 1 to claim 7, **characterized in that**:
said data is image data or software program data.

9. A mobile terminal system including a mobile terminal, which makes an information indicating apparatus indicate information on the basis of data, and a repeater apparatus which transfers data from one mobile terminal to the other mobile terminal, **characterized in that**:
said mobile terminal includes an information managing apparatus which makes said information indicating apparatus indicate download data in preference to pre-installed data.

10. The mobile terminal system according to claim 9, **characterized in that**:
said information managing apparatus selects M data out of all the download data, and selects N-M data (N is number of all data and M is integer larger than 0 and smaller than N) out of all the download data and all the pre-installed data, and decides order of indicating images.

11. A control method of a mobile terminal which can make an information indicating apparatus indicate data, **characterized by** comprising:
making said information indicating apparatus indicate download data in preference to pre-installed data.

12. The control method of mobile terminal according to claim 11, **characterized by** comprising:
selecting M data out of all the download data;
selecting N-M data (N is number of all data and M is integer larger than 0 and smaller than N) out of all the download data and all the pre-installed data; and
deciding order of indicating images.

13. The control method of mobile terminal according to claim 11, **characterized by** comprising:
selecting M data at random out of all the download data; and
selecting N-M data at random out of all the download data and all the pre-installed data.

14. The control method of mobile terminal according to claim 11, **characterized by** comprising:
selecting M data in order of storage time out of all the download data; and
selecting N-M data in order of storage time out of all the download data and all the pre-installed data.

15. The control method of mobile terminal according to claim 11, **characterized by** comprising:
selecting M data in order of number of indication times out of all the download data; and
selecting N-M data in order of number of indication times out of all the download data and all the pre-installed data.

16. The control method of mobile terminal according to claim 11, **characterized by** comprising:
selecting M data in order of number of indication times out of all the download data; and
selecting N-M data in order of number of indication times out of all the download data and all the pre-installed data.

17. The control method of mobile terminal according to any one of claim 11 to claim 16, **characterized by** comprising:
deciding priority of indicating data on the basis of combination of image source, storage time, and order of number of indication times.

18. A control program able to be read by a computer of a mobile terminal which can make an information indicating apparatus indicate data, **characterized by** comprising:
making a computer of said mobile terminal execute a processing of making said information indicating apparatus indicate download data in preference to pre-installed data.

19. The control program of mobile terminal according to claim 18, **characterized by** comprising:
making said computer execute a processing to select M data out of all the download data, a processing to select N-M data (N is number of all data and M is integer larger than 0 and smaller than N) out of all the download data and all the pre-installed data, and a processing to decide order of indicating images.

20. A storage medium which stores the control program described in claim 18 or claim 19.
